# EUROPÄISCHE PATENTSCHRIFT

(11) **EP 1 608 483 B1**
(45) Veröffentlichungstag und Bekanntmachung des Hinweises auf die Patenterteilung: **23.08.2006**
(21) Anmeldenummer: 03808248.3
(22) Anmeldetag: 23.12.2003
(51) Int. Cl.: B23P 6/00, B23K 26/20, B23K 26/04, B23K 26/38, F01D 5/00

(54) **VERFAHREN ZUR INSTANDSETZUNG UND FERTIGUNG VON GEOMETRISCH KOMPLEXEN BAUTEILEN**
METHOD FOR RESTORING AND PRODUCING GEOMETRICALLY COMPLEX COMPONENTS
PROCEDE POUR LA REMISE EN ETAT ET LA FABRICATION DE COMPOSANTS A GEOMETRIE COMPLEXE

(30) Priorität: 28.02.2003 DE 10308979
(43) Veröffentlichungstag der Anmeldung: 28.12.2005
(73) Patentinhaber: MTU Aero Engines GmbH, 80995 München (DE); Metallwarenfabrik Reichertshofen Karl Binder GmbH, 85084 Reichertshofen (DE)
(72) Erfinder: BORN, Werner, 86316 Friedberg (DE); MEIER, Reinhold, 84405 Dorfen (DE); SCHALLER, Ludwig, 85084 Reichertshofen (DE)
(86) Internationale Anmeldenummer: PCT/DE2003/004280
(87) Internationale Veröffentlichungsnummer: WO 2004/076119

(56) Entgegenhaltungen:
- EP-A- 0 403 448
- EP-A- 1 238 746
- WO-A-00/06336
- GB-A- 2 083 558
- US-A- 4 578 554
- US-A- 5 060 842
- US-A- 5 479 704
- US-A- 5 913 555
- US-B1- 6 321 448

## Beschreibung

Die Erfindung betrifft ein Verfahren zur Instandsetzung und Fertigung von geometrisch komplexen Bauteilen, gemäß dem Oberbegriff der Patentansprüche 1 und 2. Ein Verfahren gemäß dem Oberbegriff des Patentanspruchs 1 ist aus US-A-5,060,842 bekannt. Ein Verfahren gemäß dem Oberbegriff des Patentanspruchs 2 ist aus US-B1-6,321,448 bekannt.

Speziell im Strömungskanalbereich von Gasturbinen sind Bauteile einem Verschleiß durch Oxidation, Korrosion und Erosion unterworfen. Weithin können Verformungen, Risse und Löcher auftreten, wobei ab einem gewissen Schädigungsgrad eine Reparatur bzw. ein Ersatz nötig ist. Einzelteile, wie Schaufeln können relativ einfach ersetzt bzw. im ausgebauten Zustand instandgesetzt werden. Es gibt jedoch auch komplexe, integrale Bauteile, wie Gehäusesektionen mit rohrartigen, konzentrischen Wandelementen und mit mehreren, letztere verbindenden Streben, bei denen aus Kostengründen eine Reparatur in aller Regel einem kompletten Ersatz vorgezogen wird bzw. bei denen die Neuteilfertigung bereits schwierig ist. Es gibt auch Fälle, wobei solche Bauteile bereits im Neuzustand unzulässige Fehler aufweisen. Auch dann wird eine Reparatur der teuren Teile angestrebt. Schäden und Fehler können auch in Bereichen auftreten, die für Werkzeuge, wie Schneid- und Schweißeinrichtungen, schwer zugänglich sind. Es ist bekannt, für das Heraustrennen von fehlerhaften Stücken und das Einschweißen von Ersatzstücken Laserenergie zu verwenden. Standard-Fokussierköpfe von industriell eingesetzten Laseranlagen sind durch Autofokus und Drehachsen zu groß und somit für den Einsatz in eng begrenzten Bereichen nicht geeignet.

Demgegenüber besteht die Aufgabe der Erfindung darin, ein Verfahren zur Instandsetzung und Fertigung von geometrisch komplexen Bauteilen mit beschränkt zugänglichen Bereichen mittels Lasertechnik vorzuschlagen, womit Reparaturen und Fertigung kostengünstiger, präziser reproduzierbarer und mit geringerer Schweißschrumpfung ausführbar sind bzw. in vielen Fällen erstmalig möglich werden.

Diese Aufgabe wird verfahrensseitig durch die in Anspruch 1 und Anspruch 2 gekennzeichneten Merkmale gelöst, in Verbindung mit den gattungsbildenden Merkmalen in deren Oberbegriff. Bei der gesamten Bearbeitung wird ein platzsparender Spezialvorsatz in Form eines sogenannten Tubus oder eines Trägers mit Lichtleiter verwendet, mit dem der Laserstrahl geführt, umgelenkt und auf die Schneid- bzw. Schweißzone fokussiert wird. Hierfür weist der Spezialvorsatz eine verstellbare Fokussiereinrichtung auf. Der Spezialvorsatz und somit der Laserstrahl wird CNC-gesteuert bewegt, wobei die Bahndaten beim Schneiden und beim Schweißen gleich bleiben.

In dem Unteranspruch 3 ist eine bevorzugte Ausgestaltung der Verfahren nach Anspruch 1 und 2 gekennzeichnet.

Die Erfindung wird anschließend anhand der Figuren nach näher erläutert. Dabei zeigen in vereinfachter Darstellung:
Figur 1 das Herausschneiden eines Stücks aus einem Bauteil,
Figur 2 das Herausschneiden eines Ersatzstücks aus einem Reparaturteil sowie das Einschweißen des Ersatzstücks in das Bauteil.

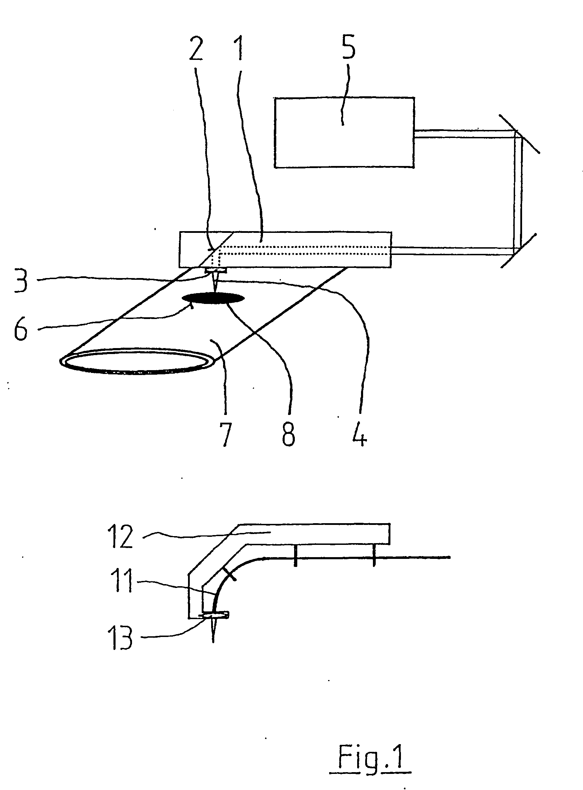

Das Bauteil 7 gemäß Figur 1 ist eine von mehreren Streben einer Gasturbinengehäusesektion. Eine derartige Gehäusesektion bildet ein integrales Bauteil mit zwei rohrartigen, konzentrischen Wandelementen, welche über mehrere, über den Umfang verteilte, radiale Streben verbunden sind. Die strömungsgünstig profilierten Streben sind auf ihrer gesamten Außenoberfläche im Betrieb heißen, aggressiven Gasen ausgesetzt, wodurch Beschädigungen durch Korrosion, Erosion, Rissbildung, Verformung, Durchbrand etc. auftreten können. Die Räume zwischen den Streben sind platzbedingt für Werkzeuge nur beschränkt zugänglich. In Figur 1 ist der Übersichtlichkeit halber nur eine solche Strebe ohne die benachbarten bzw. mit ihr verbundenen Elemente wiedergeben. Das eigentliche Bearbeitungswerkzeug bildet ein platzsparender, rohrartiger Tubus 1, der optisch mit einer Laserquelle 5 koppelbar ist. Die Laserquelle 5 kann insbesondere ein CO₂-Laser, ein Nd : YAG - Laser oder ein anderer geeigneter Lasertyp sein. Im dargestellten Fall wird der un- oder vorfokussierte Laserstrahl im Tubus 1 mittels einer Umlenkspiegelanordnung 2 um 90 ° umgelenkt und mittels einer verstellbaren Fokussiereinrichtung 3 auf die Oberfläche des Bauteils 7 fokussiert. Die Strahlumlenkung im Tubus 1 kann von 90 ° verschieden sein. Der Tubus 1 ist mechanisch mit einer CNC-gesteuerten, nicht dargestellten Maschine, wie einem Industrieroboter, einer Portalanlage usw., gekoppelt und wird von dieser bewegt. Dabei wird der Laserstrahl 4 auf einer in sich geschlossenen Bahn 6 geführt, um aus dem Bauteil 7 ein beschädigtes bzw. fehlerhaftes Stück 8 herauszuschneiden. Unten in Figur 1 ist alternativ zum Tubus 1 ein Träger 12 mit einem Lichtleiter 11 und einer Fokussiereinrichtung 13 dargestellt.

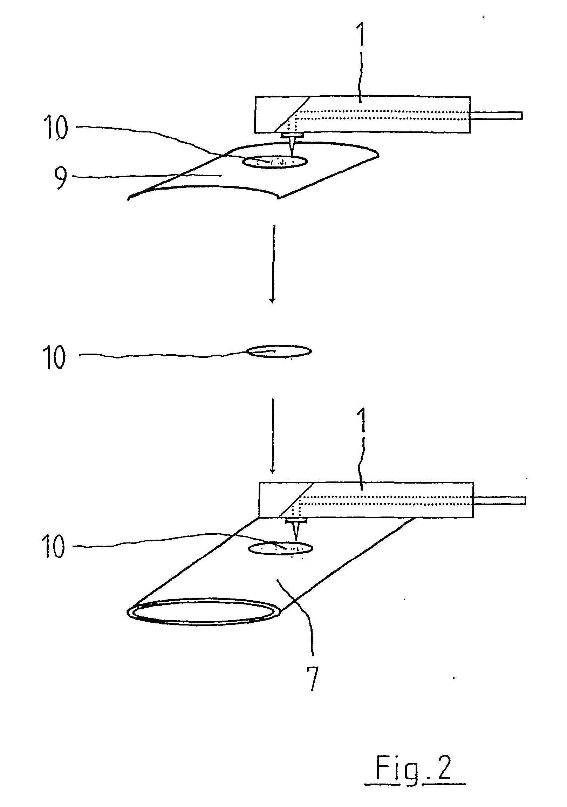

Gemäß Figur 2 oben wird mit den selben Bahndaten und dem selben Tubus 1 aus einem mit dem betroffenen Bauteilbereich zumindest weitgehend identischen Reparaturteil 9 ein dem Stück 8 entsprechendes, jedoch fehlerfreies Ersatzstück 10 herausgeschnitten. Gegenüber den Bahndaten gemäß Figur 1 kann zur Fertigung des Ersatzstücks 10 eine kleine, über die Bahnlänge konstante, seitliche Bahnkorrektur (Spaltkorrektur) berücksichtigt werden.

Gemäß Figur 2 unten wird das Ersatzstück 10 mittels des Tubus 1 in das im Bauteil 7 vorhandene Loch anstelle des fehlerhaften Stücks 8 eingeschweißt. Üblicherweise wird die Fokussiereinrichtung 3 zum Schweißen anders eingestellt als zum Schneiden.

Bei allen dargestellten Bearbeitungsschritten wird der selbe Tubus 1 oder der selbe Träger 12 mit Lichtleiter 11 verwendet, das Bauteil 7 verbleibt in ein und derselben Einspannung, das Reparaturteil wird vorzugsweise in der Nähe des Bauteils 7 so angeordnet, dass es ohne große Verfahrbewegungen des Tubus 1 bearbeitbar ist.

## Patentansprüche

1. Verfahren zur Instandsetzung von geometrisch komplexen Bauteilen mit Beschädigungen und/oder Fehlern in beschränkt zugänglichen Bereichen dieser Bauteile, insbesondere zur Instandsetzung von Gasturbinengehäusesektionen mit zwei rohrartigen, konzentrischen Wandelementen und mit mehreren, die Wandelemente verbindenden Streben, mit Beschädigungen und/oder Fehlern im Bereich der Streben und/oder Wandbereiche, bei welchem beschädigte und/oder fehlerhafte Stücke aus den Bauteilen herausgeschnitten und gleichartige Ersatzstücke eingeschweißt werden, wobei das Schneiden und das Schweißen mittels Laserenergie erfolgen, **gekennzeichnet durch** folgende Verfahrensmerkmale:
A) Mit einem Laserstrahl (4), der numerisch gesteuert auf einer in sich geschlossenen Bahn (6) bewegt wird , wird ein beschädigtes und/oder fehlerhaftes Stück (8) aus einem Bauteil (7) herausgeschnitten,
B) mit den gleichen, falls nötig um eine Spaltkorrektur modifizierten Bahndaten wie bei A wird mittels Laserstrahl aus einem Reparaturteil (9), das hinsichtlich Werkstoff und Geometrie mit dem beschädigten und/oder fehlerhaften Bereich des Bauteils (7) vergleichbar bis identisch ist, ein Ersatzstück (10) herausgeschnitten,
C) mit den gleichen Bahndaten wie bei A wird mittels Laserstrahl das Ersatzstück (10) in das Bauteil (7) eingeschweißt,
D) bei den drei Bearbeitungsschritten A bis C wird der Laserstrahl mit einem platzsparenden Spezialvorsatz in Form eines sogenannten Tubus (1) oder eines Trägers (12) mit Lichtleiter (11) un- oder vorfokussiert geführt, umgelenkt und fokussiert bzw. nachfokussiert, und
E) während der Bearbeitungsschritte A bis C verbleibt das Bauteil (7) in der selben Aufspannung.

2. Verfahren zur Fertigung von geometrisch komplexen Bauteilen mit beschränkt zugänglichen Bereichen, insbesondere zur Fertigung von Gasturbinengehäusesektionen aus zwei rohrartigen, konzentrischen Wandelementen und aus mehreren, die Wandelemente verbindenden Streben, bei welchem mit Übermaß gefertigte Elemente der Bauteile passgenau zugeschnitten und miteinander verschweißt werden, wobei das Schneiden und das Schweißen mittels Laserenergie erfolgen, **gekennzeichnet durch** folgende Verfahrensmerkmale:
A) Mit einem Laserstrahl, der numerisch gesteuert auf einer in sich geschlossenen Bahn bewegt wird, wird ein mit Übermaß gefertigtes, erstes Element passgenau zugeschnitten,
B) mit den gleichen, falls nötig um eine Spaltkorrektur modifizierten Bahndaten wie bei A wird mittels Laserstrahl ein zweites, mit Übermaß gefertigtes, an das erste Element angrenzendes Element passgenau zugeschnitten,
C) mit den gleichen Bahndaten wie bei A werden mittels Laserstrahl die beiden Elemente verschweißt,
D) bei den drei Bearbeitungsschritten A bis C wird der Laserstrahl mit einem platzsparenden Spezialvorsatz in Form eines sogenannten Tubus oder eines Trägers mit Lichtleiter un- oder vorfokussiert geführt, umgelenkt und fokussiert bzw. nachfokussiert.

3. Verfahren nach Anspruch 1 oder 2, **dadurch gekennzeichnet, dass** der Laserstrahl für Schneidbetrieb anders fokussiert wird als für Schweißbetrieb.

## Claims

1. A method of repairing geometrically complex components having damage and/or faults in regions of these components with limited access, in particular for repairing gas turbine housing sections having two tubular, concentric wall elements connected by a plurality of struts, having damage and/or faults in the region of the struts and/or wall regions, whereby damaged and/or faulty pieces are cut out of the components and replacement pieces of an identical type are welded in, wherein the cutting and the welding are effected by means of laser energy, **characterized by** the following method features:
A) by means of a laser beam (4), which is moved under numerical control along a self-contained path (6), a damaged and/or faulty piece (8) is cut out of a component (7),
B) using the same path data as in A but modified where necessary by a gap correction, a replacement piece (10) is cut by means of a laser beam out of a repair part (9), which in terms of material and geometry is comparable to identical to the damaged and/or faulty region of the component (7),
C) using the same path data as in A, the replacement piece (10) is welded by means of a laser beam into the component (7),
D) in the course of the three machining steps A to C the laser beam is guided in an unfocused or prefocused manner, deflected and focused and/or refocused by a space-saving special assembly in the form of a so-called tubus (1) or a carrier (12) with optical waveguide (11), and
E) during the machining steps A to C the component (7) remains in the same clamp.

2. A method of manufacturing geometrically complex components having regions of limited access, in particular of manufacturing gas turbine housing sections comprising two tubular, concentric wall elements connected by a plurality of struts, whereby elements of the components that are manufactured with an oversize are cut precisely to size and welded to one another, wherein the cutting and the welding are effected by means of laser energy, **characterized by** the following method features:
A) by means of a laser beam, which is moved under numerical control along a self-contained path, a first element manufactured with an oversize is cut precisely to size,
B) using the same path data as in A but modified where necessary by a gap correction, a second element manufactured with an oversize and bordering the first element is cut precisely to size by means of a laser beam,
C) using the same path data as in A, the two elements are welded together by means of a laser beam,
D) in the course of the three machining steps A to C the laser beam is guided in an unfocused or prefocused manner, deflected and focused and/or refocused by a space-saving special assembly in the form of a so-called tubus or a carrier with optical waveguide.

3. A method according to claim 1 or 2, **characterized in that** the laser beam is focused differently for cutting mode than for welding mode.

## Revendications

1. Procédé pour la réparation de composants complexes au plan géométrique présentant des détériorations et/ou des défauts dans des zones accessibles de façon limitée de ces composants, en particulier pour la réparation de sections de carter de turbine à gaz avec deux éléments de paroi tubulaires et concentriques et avec plusieurs entretoises reliant les éléments de paroi, présentant des détériorations et/ou des défauts dans la zone des entretoises et/ou des zones de paroi, dans lequel des pièces endommagées et/ou défectueuses sont découpées dans les composants et des pièces de remplacement similaires sont soudées à l'intérieur, le découpage et le soudage s'effectuant par énergie de laser, **caractérisé par** les caractéristiques suivantes du procédé :
A) avec un faisceau laser (4), qui est déplacé avec une commande numérique sur une trajectoire (6) fermée sur elle, on découpe une pièce endommagée et/ou défectueuse (8) dans un composant (7),
B) avec les mêmes données de trajectoire que pour A, modifiées si nécessaire d'une correction de fente, on découpe une pièce de remplacement (10) au moyen d'un faisceau laser dans une partie à réparer (9) qui est comparable à identique au niveau du matériau et de la géométrie avec la zone endommagée et/ou défectueuse du composant (7),
C) avec les mêmes données de trajectoire que pour A, on soude avec le faisceau laser la pièce de remplacement (10) dans le composant (7),
D) lors des trois étapes du traitement A à C, le faisceau laser est guidé de façon non focalisée ou préfocalisée dévié et focalisé ou focalisé ultérieurement avec un adaptateur spécial peu encombrant sous la forme d'un tube (1) ou d'un support (12) avec un guide de lumière (11), et
E) pendant les étapes du traitement A à C, le composant (7) reste dans la même fixation.

2. Procédé pour la fabrication de composants complexes au plan géométrique avec des zones accessibles de façon limitée, en particulier pour la fabrication de sections de carter de turbine à gaz constituées de deux éléments de paroi tubulaires et concentriques et de plusieurs entretoises reliant les éléments de paroi, dans lequel des éléments, fabriqués avec surcote, des composants sont coupés de façon très ajustée et sont soudés les uns avec les autres, le coupage et le soudage s'effectuant par énergie de laser, **caractérisé par** les caractéristiques suivantes du procédé :
A) avec un faisceau laser, qui est déplacé avec une commande numérique sur une trajectoire fermée sur elle-même, on coupe de façon très ajustée un premier élément fabriqué avec une surcote,
B) avec les mêmes données de trajectoire que pour A, modifiées si nécessaire d'une correction de fente, un second élément, fabriqué avec une surcote, contigu au premier élément, est coupé de façon très ajustée au moyen d'un faisceau laser,
C) avec les mêmes données de trajectoire que pour A, les deux éléments sont soudés au moyen d'un faisceau laser,
D) lors des trois étapes d'usinage A à C, le faisceau laser est guidé de façon focalisée ou non focalisée, dévié et focalisé ou focalisé ultérieurement avec un adaptateur spécial peu encombrant sous la forme d'un tube ou d'un support avec guide de lumière.

3. Procédé selon la revendication 1 ou 2, **caractérisé en ce que** le faisceau laser pour le mode de coupage est focalisé autrement que pour le mode de soudage.
